# EUROPEAN PATENT APPLICATION

(11) **EP 4 524 224 A1**
(43) Date of publication of application: **19.03.2025**
(21) Application number: 24713375.4
(22) Date of filing: 11.01.2024
(51) Int. Cl.: C11D 3/37, C11D 3/12, C11D 17/04, C11D 3/50, C11D 3/04, C11D 3/10, C11D 3/20, C11D 3/22, C11D 17/08, C11D 17/00, C11D 17/06, C11D 3/60, D06M 23/02

(54) **FRAGRANCE RETENTION PARTICLE COMPOSITION FOR CLOTHES AND PREPARATION METHOD THEREFOR**

(30) Priority: 26.07.2023 CN 202310922097
(71) Applicant: Guangdong Youkai Technical Co., Ltd., Foshan, Guangdong 528200 (CN)
(72) Inventor: The designation of the inventor has not yet been filed
(74) Representative: Cueto, Sénida
(86) International application number: PCT/CN2024/071723
(87) International publication number: WO 2025/020470

(57) **Abstract**

Provided is a clothing fragrance-retaining particle composition, including a pellet core and a coating layer of the pellet core, where the pellet core includes the following components: water-soluble particle, adsorbent, essence, fragrance-retaining agent, adhesive and filler; and the coating layer includes the following components: excipient, adhesive and accessory agent. The fragrance-retaining particle composition has a coating structure, and contains a specific fragrance-retaining agent and an adsorbent, which can achieve a sustained release of essence and make fragrance fixative. Further, a particle size of the fragrance-retaining particle is controllable, and the composition can prevent the loss of fragrance, thereby achieving long-lasting fragrance. The fragrance-retaining particle composition provided in the present invention exhibits many advantages, such as good solubility, strong stability and uniform appearance, of a fragrance-retaining particle.

## Description

### TECHNICAL FIELD

The present invention relates to the technical field of fabric washing and care, and particularly to a clothing fragrance-retaining particle composition and a preparation method thereof.

### BACKGROUND

Fragrance-retaining beads were initially developed by Downy under P&G Group in 2011, and were introduced to the Chinese market by P&G Group in 2017, and an upgraded version, fragrance-retaining booster beads 2.0, was launched in China in 2019, the fragrance-retaining booster beads features three advantages of being antibacterial, mite removal and dirt dissolution, and core components thereof remain fragrance essential oils and fragrance-retaining microcapsules. At present, there are two main demands for fragrance-retaining booster beads, first, consumers want to choose their favorite fragrance-retaining beads based on their respective preferences, and second, consumers desire a long-lasting and non-irritating fragrance.

Currently, three main technical solutions for fragrance-retaining products are available on the market. The first technical solution is relatively traditional, such as those provided in the patents numbered CN109652215A, CN113913250A and CN111286414A, which uses the polyethylene glycol (PEG) as a carrier to make an essence and the PEG co-melt at a high temperature, which will result in changes to fragrance during the production process, and a stability of finished products is accordingly affected. The second technical solution, as described in the patents numbered CN110760395A, CN112522040A and CN112522039A, uses water-soluble particles as carriers, an essence thereof is encapsulated on surfaces of the water-soluble particles, and the essence is always exposed on the surfaces, resulting in loss of fragrance during storage and the risk of changes in fragrance at high temperatures. The third technical solution, as described in the patents numbered CN111748426A, provides a method for preparing laundry detergent pellets, which improves the preparation of fragrance-retaining beads, but no fragrance-retaining agent is coated inside the pellets, and a coating layer thereof contains too many things, resulting in a relatively low fragrance content on the whole and greatly weakening the fragrance-retaining effect.

To sum up, there is an urgent need to design a fragrance-retaining composition with reasonable process flow, strong stability, good solubility and hindering the loss of fragrance, and ultimately providing an excellent and long-lasting fragrance-retaining effect to solve the problems in the prior art.

### SUMMARY

In view of the forgoing technical problems, the present invention provides a clothing fragrance-retaining particle composition and a preparation method thereof, so as to solve the defects in the prior art. In the technical solution of the present invention, the fragrance-retaining particle composition has a coating structure where essence components are coated in a pellet core, and the composition contains a specific fragrance-retaining agent and an adsorbent, which can achieve a sustained release of essence and make fragrance fixative. Further, a particle size of the fragrance-retaining particle is controllable, and the composition can prevent the loss of fragrance, thereby achieving long-lasting fragrance. The fragrance-retaining particle composition provided in the present invention exhibits many advantages, such as good solubility, strong stability and uniform appearance, of a fragrance-retaining particle.

An objective of the present invention is to provide a clothing fragrance-retaining particle composition, including a pellet core and a coating layer of the pellet core;
the pellet core includes the following components in parts by mass:

| | |
|---|---|
| water-soluble particle | 10-30 parts |
| adsorbent | 5-30 parts |
| essence | 2-15 parts |
| fragrance-retaining agent | 0.1-10 parts |
| adhesive | 10-30 parts |
| filler | 1-10 parts |

the coating layer comprises the following components in parts by mass:

| | |
|---|---|
| excipient | 1-10 parts |
| adhesive | 0.01-5 parts |
| accessory agent | 0.01-5 parts |

where the fragrance-retaining agent is selected from acrylamide copolymers;
comonomers of the acrylamide copolymers include (3-acrylamidopropyl)trimethylammonium chloride, acrylamide, nonylphenol polyoxyethylene ether acrylate and acrylic acid; and
the adsorbent is fatty acid modified silicon dioxide.

Further, the accessory agent is selected from one or more of dye, cationic polymer and inorganic salt.

The above acrylamide copolymers, on the one hand, can provide a sustained release of fragrance, and on the other hand, can form a unique flocculation with solid particles in detergent, such that the essence is carried and deposited on fabrics, making the fragrance-retain effect of the essence on the fabric more long-lasting.

Further, the water-soluble particle is selected from one or more of sucrose, glucose, fructose, maltose, dextrin, PEG and sodium carbonate.

Further, the essence is selected from one or more of liquid essence and microcapsule essence.

Specifically, the liquid essence is usually an essence prepared by taking mixed oils or oil-soluble substances designed by essence companies as solvents, water or water-soluble substances as solvents, depending on consumer demands. An essence formula is adjusted based on market research on the performance of the essences' top note, middle note and base note. In the fragrance-retaining particle composition provided in the present invention, the liquid essence includes one of water-soluble essence or oil-soluble essence, or a combination of the water-soluble essence and the oil-soluble essence.

The microcapsule essence is prepared by wrapping the essence, plant essential oils and other raw materials with special materials through modern technological means, to form microcapsule emulsion. Wrapping material can be selected from polyurea, polyurethane and/or polyurea polyurethane, preferably polyoxymethylene urea, and the systems include but are not limited to urea-formaldehyde and/or melamine-formaldehyde. After the product is treated with an aromatic agent, the duration of fragrance retention of the product can be greatly extended. In the washing process, the microcapsule essence remains in fibers of clothing. As the clothing is rubbed, fragrance-retaining microcapsules will burst like bubbles, and continue to release fragrance.

Further, an added amount of the microcapsule essence is 1-10 parts.

Further, an added amount of the liquid essence is 1-10 parts.

Further, the excipient is selected from one or more of titanium pigment, calcium carbonate powder, titanium powder, calcium silicate, silicon dioxide, kaolin, montmorillonite powder and mica powder.

Further, an added amount of the adsorbent is 2-10 parts.

Further, in order to diversify the appearance and function of the fragrance-retaining particles, the accessory agent can unrestrictedly and selectively add the following substances: one of or a combination of the dye, the cationic polymer and the inorganic salt, where the inorganic salt is an anhydrous crystalline salt, which can be selected from but be not limited to sodium chloride, potassium chloride, magnesium chloride, calcium chloride, sodium sulfate, potassium sulfate, magnesium sulfate, calcium carbonate and calcium bicarbonate.

The cationic polymer be selected from but be not limited to guar hydroxypropyltriamonium chloride, arabic gum, ammonium polyphosphate, polyquaternium-6, polyquaternium-7, polyquaternium-10, polyquaternium-39 and polyquaternium-67.

Further, the fatty acid is selected from one or more of caprylic acid, nonanoic acid, decanoic acid, lauric acid, myristic acid, palmitic acid and stearic acid.

Further, the filler is selected from one or more of bicarbonate, carbonate, sulfate, nitrate, chloride, citrate, tartrate, acetate and formate.

Further, the adhesive is selected from one or more of bentonite, starch paste, dextrin, polyvinyl alcohol and hydroxypropyl methylcellulose.

Another objective of the present invention is to provide a preparation method of the above clothing fragrance-retaining particle composition, and the method includes the following steps:
S1. preparing a fragrance-retaining agent:
   adding comonomers to water, stirring until dissolving to obtain a solution, adjusting a pH of the solution, and adding an initiator under the protection of nitrogen, heating the solution for reaction, and purifying to obtain the fragrance-retaining agent;
S2. preparing an adsorbent:
   adding silicon dioxide to a liquid fatty acid, performing ultrasonic treatment, carrying out heating reaction, and purifying to obtain the adsorbent.

Further, a mass ratio of (3-acrylamidopropyl)trimethylammonium chloride to acrylamide to nonylphenol polyoxyethylene ether acrylate to acrylic acid in the comonomers is 10-20 : 5-30 : 5-10 : 1-15.

Further, the initiator is selected from one or more of ammonium persulfate and potassium persulfate.

Further, the pH is 5-9.

Further, in the step S1, the heating reaction has a temperature of 45-75°C, and a duration of 24-40 h; and in the step S2, the heating reaction has a temperature of 70-90°C, and a duration of 0.5-3 h.

Further, the method also includes the following steps:
S3. pouring water-soluble particle, the adsorbent, the adhesive, the fragrance-retaining agent and the filler into a pelletizing device;
S4. mixing essence with a sufficient amount of water to form a spraying solution, performing spraying pelletization to obtain pellet core, and drying to obtain pellet core; and
S5. mixing excipient, adhesive, accessory agent and water to prepare and obtain a coating solution, spraying the coating solution on surface of the pellet core to form a coating layer, and drying the pellet core to obtain the clothing fragrance-retaining particle composition.

The present invention has the following beneficial effects:
1. The clothing fragrance-retaining particle composition prepared by the present invention has a core-shell structure, and the core structure contains a fragrance-retaining by copolymerizing four monomers: (3-acrylamidopropyl)trimethylammonium chloride, acrylamide, nonylphenol polyoxyethylene ether acrylate and acrylic acid, the nonylphenol polyoxyethylene ether acrylate is used as comonomers can reduce surface tension, allowing better contact between fragrance-retaining agent and essence; the acrylamide can thicken and improve adhesion, improve the wetting performance of the fragrance-retaining agent in fabrics, thereby preventing the volatilization and loss of fragrance molecules; the acrylic acid monomer introduces a large number of carboxyl groups, which further improves the polarity, and is better compatible with other components in the composition, thus making the product more stable when combined with other components such as essence; and the nonylphenol polyoxyethylene ether acrylate has a long-chain structure and contains numerous oxygen-containing functional groups, which promotes entanglement and adsorption with fragrance molecules in the formula, and forms intermolecular force between various components, such that the stability and binding strength of the product are improved, and the performance of sustained release and fragrance retention is effectively improved. The tetrapolymer has the advantages of good water solubility, improving the thermal stability of the composition, preventing deactivation at high temperatures, and forming a unique flocculation with solid particles in detergent, such that the essence can be deposited on fabrics, a sustained release effect of fragrance-retaining agent is achieved, and essence in the fragrance-retaining beads can better penetrate into the fibers to achieve a long-lasting fragrance-retaining effect.
2. The clothing fragrance-retaining particle composition prepared by the present invention uses fatty acid modified silicon dioxide as an adsorbent, which improves the dispersion and thermal stability of silicon dioxide, resulting in more uniform dispersion in the composition. Furthermore, since the surface of modified silicon dioxide is porous, allowing for greater adsorption of essence; and the fatty acid modified silicon dioxide exhibits better lipophilicity and compatibility with the fragrance-retaining agent, further increasing the stability of the composition. The clothing fragrance-retaining particle composition prepared by the present invention is capable of promoting the flocculation of more essence on the surface of fabric fibers, and increasing the deposition amount of essence on clothes, greatly enhancing the fragrance retention effect.

### DETAILED DESCRIPTION OF EMBODIMENTS

In order to more clearly illustrate the technical solution in the present invention, the following embodiments are enumerated. Unless otherwise specified, raw materials, reactions and post-treatment method stated in the embodiments are all common commercially available raw materials and technical means known to those skilled in the art.

The terms "preferred", "preferably", "more preferred" and the like, in the present invention, refer to embodiments of the present invention that may afford certain benefits, under certain circumstances. However, other embodiments may also be preferred, under the same or other circumstances. In addition, the recitation of one or more preferred embodiments does not imply that other embodiments are not available, nor is it intended to exclude other embodiments from the scope of the present invention.

It should be understood that, except in any operating examples or unless otherwise indicated, all numerical values representing amounts of components used, for example, in the specification and claims should be understood to be modified by the term "about" under all circumstances. Therefore, unless indicated to the contrary, the numerical parameters set forth in the following specification and attached claims are approximations that may vary depending upon the desired properties to be obtained by the present invention.

It should be noted that, during the specific implementation process, the pelletizing device mentioned adopts relatively mature devices available on the market.

The glucose in the examples of the present invention is water-soluble particles and purchased from Shandong Li'ang New Material Technology Co., Ltd.

The liquid essence in the examples and comparative examples is purchased from Givaudan, with the brand of "Fruity and Floral Fragrance-retaining - Fresh Summer."

The microcapsule essence in the example is purchased from Givaudan, with the brand of "Fruity and Floral Fragrance-retaining - Charming Grace."

The light calcium carbonate in the examples of the present invention is used as a filler and purchased from Jiangxi Polysilicon Mining Co., Ltd.

The starch paste in the examples of the present invention is used as an adhesive and purchased from Wanruida.

The bentonite in the examples of the present invention is used as an adhesive and purchased from Xinyang Juxin Industrial Co., Ltd.

The titanium pigment in the examples of the present invention is used as an excipient and purchased from Jiangxi Tuo'an New Materials Co., Ltd.

The calcium carbonate powder in the examples of the present invention is used as an excipient and purchased from Jiangxi Tuobang New Materials Co., Ltd.

The water-soluble dye in the examples of the present invention is BLUE HP and purchased from Milliken.

The (3-acrylamidopropyl)trimethylammonium chloride in the examples of the present invention is purchased from Shanghai Yi'en Chemical Technology Co., Ltd.

The acrylamide in the examples of the present invention is purchased from TCI (Shanghai) Development Co., Ltd.

The nonylphenol polyoxyethylene ether acrylate in the examples of the present invention is prepared by the inventor by reference to the preparation method in the literature: Synthesis of Nonylphenol Polyoxyethylene Ether Acrylate Polymer and Its Surface Activity and Heavy Oil Viscosity Reduction Performance [J], By Zhang Fusheng, Liu Guoliang, Xu Xiaofang, et al., Journal of Donghua University (Natural Science Edition) 2020, 46(05): 747-753.

The acrylic acid, lauric acid, silicon dioxide and hexanoic acid in the examples of the present invention are all purchased from TCI (Shanghai) Development Co., Ltd.

The PVA in the examples of the present invention is used as an adhesive and purchased from TCI (Shanghai) Development Co., Ltd.

Components and corresponding parts by mass of each component in the clothing fragrance-retaining particle composition of Examples 1-3 and Comparative Examples 1-3 are shown in Table 1 below.

**Table 1 Components and their Parts by Mass in Examples 1-3 and Comparative Examples 1-3**

| Components | Example 1 | Example 2 | Example 3 | Comparative Example 1 | Comparative Example 2 | Comparative Example 3 |
|---|---|---|---|---|---|---|
| Pellet core (in parts) | | | | | | |
| Glucose | 10 | 20 | 30 | 20 | 20 | 20 |
| Fatty acid modified silicon dioxide | 5 | 7 | 20 | 7 | 0 | 0 |
| Liquid essence | 2 | 4 | 5 | 4 | 4 | 4 |
| Microcapsule essence | 3 | 5 | 7 | 5 | 5 | 5 |
| Acrylamide copolymer | 2 | 5 | 10 | 0 | 5 | 5 |
| Acrylamide copolymer A | 0 | 0 | 0 | 5 | 0 | 0 |
| Starch paste | 17 | 5 | 15 | 5 | 5 | 5 |
| Bentonite | 10 | 18 | 10 | 18 | 18 | 18 |
| Light calcium carbonate | 3 | 10 | 8 | 10 | 10 | 10 |
| Hexanoic acid modified silicon dioxide | 0 | 0 | 0 | 0 | 7 | 0 |
| Silicon dioxide | 0 | 0 | 0 | 0 | 0 | 7 |

| Coating layer (in parts) | | | | | | |
|---|---|---|---|---|---|---|
| Titanium pigment | 1 | 2 | 3 | 2 | 2 | 0 |
| Calcium carbonate powder | 7 | 7 | 7 | 7 | 7 | 0 |
| Water | 20 | 20 | 20 | 20 | 20 | 0 |
| Water-soluble dye | 0.01 | 0.01 | 0.01 | 0.01 | 0.01 | 0 |
| PVA | 0.5 | 0.5 | 0.5 | 0.5 | 0.5 | 0 |

A preparation method of a clothing fragrance-retaining particle composition in Examples 1-3 includes the following steps:
S1. preparation of a fragrance-retaining agent (acrylamide copolymer):
   15 g of (3-acrylamidopropyl)trimethylammonium chloride, 25 g of acrylamide, 7 g of nonylphenol polyoxyethylene ether acrylate and 5.7 g of acrylic acid were in sequence added to 600 mL of water, stirred until dissolved to obtain a solution, a pH of the solution was adjusted to 7 with a mass concentration of 30% sodium hydroxide solution, and under the protection of nitrogen, 14 mL of 0.05 mol/L potassium persulfate solution was added to the solution, heated up to 65°C and reacted for 30 h, and the solution was washed and filtered to obtain the fragrance-retaining agent;
S2. preparation of an adsorbent (fatty acid modified silicon dioxide):
   1 g of silicon dioxide was immersed in a sufficient amount of liquid lauric acid, sonicated for 30 min and reacted at 80°C for 1 h to obtain a solution, and the solution was centrifuged and washed, and dried at room temperature to obtain the adsorbent;
S3. water-soluble particle, the adsorbent, adhesive, the fragrance-retaining agent and filler were poured into a pelletizing device;
S4. essence and a sufficient amount of water were mixed to form a spraying solution, spraying pelletization was performed to obtain pellet core, and the pellet core was then dried; and
S5. a coating solution was prepared by mixing the excipient, the adhesive, the accessory agent and water, the coating solution was sprayed on surface of the pellet core to form a coating layer, and after being dried, the clothing fragrance-retaining particle composition was obtained.

Differences between Comparative Examples and Example 2 are:
In Comparative Example 1, acrylamide copolymer A was added to replace the acrylamide copolymer, the acrylamide copolymer A was (3-acrylamidopropyl)trimethylammonium chloride, a binary copolymer of an acrylamide (that is, nonylphenol polyoxyethylene ether acrylate and acrylic acid in an acrylamide copolymer monomer in Examples were removed, and the other components remain unchanged), and other components and the preparation method were the same; in Comparative Example 2, an equal mass of hexanoic acid modified silicon dioxide was added to replace the fatty acid modified silicon dioxide, and other components and the preparation method were the same; and in Comparative Example 3, the coating layer was removed, only the pellet core structure was included, and other components and the preparation method were the same.

### Test Example 1

### Fragrance retention test

15 g of each of the fragrance-retaining particle compositions in Examples 2 and Comparative Examples 1-3 was taken and placed on a pure cotton towel (with the same specification), the pure cotton towel was put into a washing machine, the washing machine was adjusted to a mixed washing mode, and each of the towel was washed for 60 min.

After the towels were washed, 10 trained evaluators were asked to evaluate fragrance concentration of each of the towels, the fragrance concentration was scored on a scale of 1-5, and the higher the score was, the stronger the fragrance intensity of the product became.

Towels immediately after being washed were defined as fragrance retention effect evaluation point 1, towels after being dried were defined as fragrance retention effect evaluation point 2, towels stored for two weeks after being rubbed were defined as fragrance retention effect evaluation point 3, and the evaluators gave scores of the fragrance retention effect for the three evaluation points. Final test results were an average of the scores from the 10 evaluators and were shown in Table 2 below.

**Table 2 Scores of Fragrance Retention Effect at Different Fragrance Retention Effect Evaluation Points in Example 2 and Comparative Examples 1-3**

| Sample | Score of fragrance retention effect at fragrance retention effect evaluation point 1 | Score of fragrance retention effect at fragrance retention effect evaluation point 2 | Score of fragrance retention effect at fragrance retention effect evaluation point 3 |
|---|---|---|---|
| Example 2 | 4.5 | 4.3 | 3.5 |
| Comparative Example 1 | 3.5 | 2.7 | 1.6 |
| Comparative Example 2 | 4.1 | 3.7 | 3.0 |
| Comparative Example 3 | 2.5 | 1.8 | 0.8 |

Test results in Table 2 indicate that the score of Example 2 is obviously better than those of Comparative Examples 1-3. It is proved that the acrylamide copolymer used in Example 2 as a fragrance-retaining agent can achieve a sustained release of the essence and enhance the long-lasting fragrance of the essence; in contrast, the essence in Comparative Example 1 in which the acrylamide copolymer is replaced exhibits higher volatility, making the fragrance from the fragrance-retaining agent diminished gradually over time; Comparative Example 2 uses the hexanoic acid modified silicon dioxide as an adsorbent, proving reduced dispersion and adsorption effects, and resulting in a decrease in the fragrance retention effect of the fragrance-retaining agent; and Comparative Example 3 does not have a coating layer, showing the worst fragrance retention effect.

### Test Example 2

### Dissolution rate test

In a parallel experiment, a breaker was filled in with 1 L of water, 0.2 g of each of the samples in Example 2 and Comparative Examples 1-3 was weighed and was put into water separately, the time taken for each sample to completely dissolved was observed at a rotation speed of 1000 rpm, and results were shown in Table 3.

**Table 3 Dissolution Time of Samples in Example 2 and Comparative Examples 1-3**

| Sample | Dissolution time (min) |
|---|---|
| Example 2 | 4 |
| Comparative Example 1 | 6 |
| Comparative Example 2 | 6 |
| Comparative Example 3 | 1 |

Experimental results in Table 3 indicate that the sample produced in Example 2 of the present invention exhibits good solubility compared with that of the comparative examples. In Comparative Example 1, the replacement of the acrylamide copolymer reduces the solubility of the composition and extends the dissolution time of the fragrance-retaining beads; in Comparative Example 2, the replacement of the modified silicon dioxide also weakens the dissolution capability; and Comparative Example 3 does not contain a coating layer, thus showing the shortest dissolution time.

### Test Example 3

### Product stability test

Samples of Example 2 and Comparative Examples 1-3 were separately placed in ovens at 0°C, a constant temperature of 25°C and 45°C for 1 month, the samples were then taken out, and changes in color difference of the samples were observed with naked eyes. Experimental results were recorded in the table below.

**Table 4 Color Difference Records of Samples in Example 2 and Comparative Examples 1-3**

| Sample | Sample at 0°C | Sample at 25°C | Sample at 45°C |
|---|---|---|---|
| Example 2 | No yellowing | No yellowing | Slighting yellowing |
| Comparative Example 1 | Slighting yellowing | Slighting yellowing | Obvious yellowing |
| Comparative Example 2 | No yellowing | Slighting yellowing | Slighting yellowing |
| Comparative Example 3 | Slighting yellowing | Obvious yellowing | Severe yellowing |

Experimental results in Table 4 indicate that Example 2 exhibits good stability and does not produce severe color changes, while the acrylamide copolymer is replaced in Comparative Example 1, the modified silicon dioxide is replaced in Comparative Example 2, resulting in a decrease in compatibility, dispersion and stability among components; and Comparative Example 3, without a coating layer, is more susceptible to environmental conditions such as external temperature, making the product prone to oxidation and discoloration at both room temperature and high temperatures.

For those skilled in the art, it is apparent that the present invention is not limited to the details of the above exemplary embodiments, and the present invention may be implemented in other specific forms without departing from the spirit or basic features of the present invention. Therefore, the embodiments should be regarded as illustrative and non-restrictive no matter from which point of view. The scope of the present invention is defined by the appended claims rather than the above specification, and therefore, it is intended that all changes which fall within the meaning and scope of equivalency of the claims are embraced in the present invention.

In addition, it should be understood that although the description is described according to implementations, each implementation does not include only one independent technical solution, the description is for clarity only, and those skilled in the art should take the description as a whole, the technical solutions in the various embodiments may be appropriately combined to form other implementations understandable by those skilled in the art.

### ABSTRACT OF THE SPECIFICATION

Provided is a clothing fragrance-retaining particle composition, including a pellet core and a coating layer of the pellet core, where the pellet core includes the following components: water-soluble particle, adsorbent, essence, fragrance-retaining agent, adhesive and filler; and the coating layer includes the following components: excipient, adhesive and accessory agent. The fragrance-retaining particle composition has a coating structure, and contains a specific fragrance-retaining agent and an adsorbent, which can achieve a sustained release of essence and make fragrance fixative. Further, a particle size of the fragrance-retaining particle is controllable, and the composition can prevent the loss of fragrance, thereby achieving long-lasting fragrance. The fragrance-retaining particle composition provided in the present invention exhibits many advantages, such as good solubility, strong stability and uniform appearance, of a fragrance-retaining particle.

## Claims

1. A clothing fragrance-retaining particle composition, comprising a pellet core and a coating layer of the pellet core; wherein
the pellet core comprises the following components in parts by mass:
| | |
|---|---|
| water-soluble particle | 10-30 parts |
| adsorbent | 5-30 parts |
| essence | 2-15 parts |
| fragrance-retaining agent | 0.1-10 parts |
| adhesive | 10-30 parts |
| filler | 1-10 parts |
the coating layer comprises the following components in parts by mass:
| | |
|---|---|
| excipient | 1-10 parts |
| adhesive | 0.01-5 parts |
| accessory agent | 0.01-5 parts |
wherein the fragrance-retaining agent is selected from acrylamide copolymer;
comonomers of the acrylamide copolymer comprise (3-acrylamidopropyl)trimethylammonium chloride, acrylamide, nonylphenol polyoxyethylene ether acrylate and acrylic acid; and
the adsorbent is fatty acid modified silicon dioxide.

2. The clothing fragrance-retaining particle composition according to claim 1, wherein the accessory agent is selected from one or more of dye, cationic polymer and inorganic salt.

3. The clothing fragrance-retaining particle composition according to claim 1, wherein the essence is selected from one or more of liquid essence and microcapsule essence.

4. The clothing fragrance-retaining particle composition according to claim 1, wherein the excipient is selected from one or more of titanium pigment, calcium carbonate powder, titanium powder, calcium silicate, silicon dioxide, kaolin, montmorillonite powder and mica powder.

5. A preparation method of the clothing fragrance-retaining particle composition according to claim 1, comprising the following steps:
S1. preparing a fragrance-retaining agent:
adding comonomers to water, stirring until dissolving to obtain a solution, adjusting a pH of the solution, adding an initiator under the protection of nitrogen, carrying out heating reaction, and purifying to obtain the fragrance-retaining agent;
S2. preparing an adsorbent:
adding silicon dioxide to a liquid fatty acid, performing ultrasonic treatment, carrying out heating reaction, and purifying to obtain the adsorbent.

6. The preparation method of the clothing fragrance-retaining particle composition according to claim 5, wherein a mass ratio of (3-acrylamidopropyl)trimethylammonium chloride to acrylamide to nonylphenol polyoxyethylene ether acrylate to acrylic acid in the comonomers is 10-20 : 5-30 : 5-10 : 1-15.

7. The preparation method of the clothing fragrance-retaining particle composition according to claim 5, wherein the initiator is selected from one or more of ammonium persulfate and potassium persulfate.

8. The preparation method of the clothing fragrance-retaining particle composition according to claim 5, wherein in the step S1, the heating reaction has a temperature of 45-75°C, and a duration of 24-40 h; and in the step S2, the heating reaction has a temperature of 70-90°C, and a duration of 0.5-3 h.

9. The preparation method of the clothing fragrance-retaining particle composition according to claim 5, wherein the fatty acid is selected from one or more of caprylic acid, nonanoic acid, decanoic acid, lauric acid, myristic acid, palmitic acid and stearic acid.

10. The preparation method of the clothing fragrance-retaining particle composition according to claim 5, further comprising the following steps:
S3. pouring water-soluble particle, the adsorbent, the adhesive, the fragrance-retaining agent and the filler into a pelletizing device;
S4. mixing essence with a sufficient amount of water to form a spraying solution, performing spraying pelletization to obtain pellet core, and drying to obtain pellet core; and
S5. mixing excipient, adhesive, accessory agent and water to prepare and obtain a coating solution, spraying the coating solution on surface of the pellet core to form a coating layer, and drying the pellet core to obtain the clothing fragrance-retaining particle composition.
